# FASCICULE DE BREVET EUROPEEN

(11) **EP 2 039 209 B1**
(45) Date de publication et mention de la délivrance du brevet: **01.11.2017**
(21) Numéro de dépôt: 07803992.2
(22) Date de dépôt: 06.07.2007
(51) Int. Cl.: H04W 48/18

(54) **PROCEDE, DISPOSITIF ET SYSTEME DE SELECTION D'UN RESEAU A ACCES SANS FIL SUR LA BASE D'INFORMATION D'ENVIRONNEMENT, PROGRAMME D'ORDINATEUR ET SUPPORT DE DONNEES CORRESPONDANT**
VERFAHREN, VORRICHTUNG UND SYSTEM ZUR AUSWAHL EINES FUNKZUGANGSNETZWERKS AUF BASIS VON UMGEBUNGSDATEN SOWIE COMPUTERPROGRAMM UND ENTSPRECHENDES DATENMEDIUM DAFÜR
METHOD, DEVICE AND SYSTEM OF SELECTING A WIRELESS ACCESS NETWORK BASED ON ENVIRONMENT INFORMATION, COMPUTER PROGRAM AND CORRESPONDING DATA MEDIUM

(30) Priorité: 10.07.2006 FR 0606275
(43) Date de publication de la demande: 25.03.2009
(73) Titulaire: Orange, 75015 Paris (FR)
(72) Inventeur: JAVAID, Usman, 22300 Lannion (FR); MEDDOUR, Djamal-Eddine, 22300 Lannion (FR); AHMED, Toufik, 33400 Talance (FR)
(74) Mandataire: Cabinet Plasseraud
(86) Numéro de dépôt international: PCT/FR2007/051613
(87) Numéro de publication internationale: WO 2008/007005

(56) Documents cités:
- WO-A-2005/064957
- GB-A- 2 398 705
- US-A1- 2006 029 003

## Description

La présente invention concerne un procédé de sélection d'un réseau de télécommunication dans un ensemble hétérogène de réseaux à accès sans fil formant une infrastructure apte à assurer une liaison globale entre un premier terminal et un deuxième terminal.

Le développement actuel des systèmes de télécommunications tend vers une intégration de plus en plus grande des services multimédia accompagnée d'un accès diversifié à grande mobilité et grande couverture géographique.

L'essor de la production de terminaux mobiles à diverses capacités de traitement informationnel, portées de transmission, fonctions multiples comme par exemple les assistants personnels (PDA), les téléphones mobiles personnels, les ordinateurs portables, en témoigne ainsi que l'apparition de nouvelles techniques de réseau d'accès sans fil comme notamment Wi-Fi, WiMax, UMTS et DVB-H.

Dans le cadre d'une application supportée par une liaison de télécommunication entre un premier terminal et un deuxième terminal, il est connu de sélectionner un réseau de transport ou d'acheminement de l'application en prenant en compte globalement des critères se rapportant à la liaison dans sa totalité.

Il est connu également dans la prise en compte de la liaison globale pour la sélection du réseau de considérer l'information contextuelle liée à la politique d'administration du réseau par l'opérateur, la qualité de service attendue en fonction du réseau choisi, l'information contextuelle liée à la capacité individuelle de traitement informationnel et de transmission des premier et deuxième terminaux ou au profil d'utilisateur qui fixe des critères subjectifs d'utilisateur prédéterminés.

Il peut se produire lors de la sélection d'un réseau, que les ressources d'accès à l'infrastructure réseau du terminal soient limitées voire inadaptées par rapport aux informations contextuelles décrites et énumérées ci-dessus. Le document WO2005/064957 montre un procédé de sélection d'un réseau de télécommunications dans lequel on choisit le réseau en fonction des caractéristiques communes des terminaux. Il existe donc un besoin d'adaptation des ressources d'accès à l'infrastructure réseau d'au moins un terminal à l'application et à la liaison souhaitées par les utilisateurs.

L'invention répond à ce besoin en fournissant des ressources d'accès à l'infrastructure réseau adaptées à l'application et la liaison souhaitées par le terminal source et/ou le terminal de destination.

A cet effet, l'invention concerne un procédé de sélection d'un réseau de télécommunication sans fil pour terminaux, caractérisé en ce que les informations de contexte d'au moins un terminal de référence pris dans l'ensemble des terminaux à contexte comprennent des informations relatives à un environnement local de l'au moins un terminal de référence, l'environnement local de l'au moins un terminal de référence étant un ensemble de terminaux raccordés effectivement à l'au moins un terminal de référence indépendamment de l'infrastructure, et en ce que la détermination du réseau choisi dépend des informations relatives à l'environnement local de l'au moins un terminal de référence.

Un terminal raccordé effectivement à un terminal de référence est un terminal allumé en état de fonctionnement et disposant d'une liaison de communication opérationnelle avec le terminal de référence. Le terminal est raccordé au terminal de référence indépendamment de l'infrastructure lorsque la liaison opérationnelle avec le terminal de référence ne comporte aucune liaison partielle ou totale faisant partie de l'infrastructure. Ainsi, il est permis d'utiliser les ressources de communication avec l'infrastructure des terminaux raccordés en complément ou en alternative des ressources propres du terminal de référence.

Selon des modes particuliers de réalisation, le procédé comprend l'une ou plusieurs des caractéristiques suivantes prise(s) isolément ou selon toutes les combinaisons techniquement possibles :
- les informations relatives à l'environnement local dudit au moins un terminal de référence comprennent un ensemble de connexions effectives d'accès réseau associées à au moins certains terminaux de l'environnement local du terminal de référence, une connexion effective d'accès réseau étant une liaison à un terminal actif de l'environnement local du terminal de référence ou à un noeud réseau de l'infrastructure ;
   un terminal actif est un terminal allumé en état de fonctionnement. Les informations relatives à l'environnement local permettent de définir les options de connexion de manière exhaustive du terminal de référence à l'infrastructure.
- les informations relatives à l'environnement local dudit au moins un terminal de référence comprennent un ensemble de capacités de traitement informationnel associées à au moins certains terminaux de l'environnement local du terminal de référence ;
   ainsi, les limitations de transmission inhérentes aux terminaux raccordés de l'environnement local sont connues et peuvent être prises en compte.
- la fourniture des informations relatives à l'environnement local est effectuée par chaque terminal de référence ;
   ainsi, la gestion des informations d'environnement local est atomisée sur chaque terminal et ne nécessite pas l'utilisation d'un serveur complexe.
- la fourniture des informations de l'environnement local est effectuée par une base de données centrale regroupant pour un ensemble de terminaux, les données d'informations relatives à l'environnement local de tous les terminaux ;
   ainsi, la mise à disposition des informations d'environnement local est plus rapide et ne nécessite pas l'établissement d'une liaison préalable entre terminaux.
- le procédé comprend l'étape consistant à préparer les informations relatives à l'environnement local de chaque terminal de référence comprenant les étapes consistant à :
   construire une liste dite directe des terminaux et des noeuds réseau de l'infrastructure raccordés effectivement et directement au terminal de référence,
   collecter pour chaque terminal raccordé effectivement et directement au terminal de référence les informations d'environnement local associées ;
   les terminaux ou noeuds raccordés effectivement au sens défini ci-dessus sont également raccordés directement au terminal de référence lorsque la liaison de raccordement est une liaison simple à fil ou sans fil ne faisant intervenir aucun terminal ou noeud intermédiaire. Ainsi, la préparation des informations relatives à l'environnement local permet la mise à disposition rapide des informations prêtes à l'emploi.
- la détermination du réseau choisi dépend d'informations d'au moins une catégorie de l'ensemble des catégories constitué pour chaque terminal de contexte par
   un profil d'utilisateur indiquant des critères variés d'acceptation de fourniture de service associé à une application,
   un profil de consommation,
   un profil de types de couvertures souhaités,
   des capacités de transmission et qualité de réception calculées associée à une option de réseau,
   des informations de profil d'opérateur prenant en compte la capacité de son infrastructure et sa politique tarifaire ;
   ainsi, le critère de détermination du réseau choisi est une combinaison des informations d'environnement local et d'autres informations.
- l'ensemble de l'au moins un terminal de référence contient un seul élément.

Il n'est pas nécessaire de disposer des informations d'environnement local des deux terminaux à la fois d'une liaison globale, seules celles du terminal de destination pourraient être requises dans certaines applications comme notamment le transfert d'un fichier de grande taille.

L'invention concerne également un système de télécommunications mettant en oeuvre le procédé de sélection d'un réseau de télécommunication sans fil pour terminaux, caractérisé en ce qu'il comprend des moyens de mise en oeuvre du procédé défini tel que défini ci-dessus.

L'invention concerne également un programme d'ordinateur comprenant des instructions de code de programme pour l'exécution des étapes du procédé de sélection tel que décrit ci-dessus lorsque ledit programme est exécuté sur un ordinateur.

L'invention concerne également un support de données comprenant des instructions d'ordinateur permettant de mettre en oeuvre des étapes du procédé de sélection d'un réseau de télécommunication sans fil pour terminaux, caractérisé en ce qu'il comprend des instructions qui, lorsqu'elles sont exécutées par un ordinateur mettent en oeuvre le procédé tel que défini ci-dessus.

L'invention concerne également un dispositif de sélection d'un réseau de télécommunication à accès sans fil pour terminaux parmi un ensemble d'au moins deux réseaux de télécommunication à accès sans fil formant une infrastructure de réseaux, apte à assurer une liaison globale entre un premier terminal et un deuxième terminal comprenant :
- des moyens de fourniture d'informations contextuelles, agencés pour fournir des informations de contexte relatives à un ensemble d'au moins un terminal dit à contexte ;
- des moyens de détermination d'un réseau de télécommunication à accès sans fil, agencés pour déterminer un réseau à partir des informations de contexte en suivant un ensemble de règles prédéterminées,
caractérisé en ce que, les informations de contexte d'au moins un terminal de référence pris dans l'ensemble des terminaux à contexte comprenant des informations relatives à un environnement local de l'au moins un terminal de référence, l'environnement local de l'au moins un terminal de référence étant un ensemble de terminaux raccordés effectivement à l'au moins un terminal de référence indépendamment de l'infrastructure, les moyens de détermination du réseau sont en outre agencés pour déterminer le réseau en fonction des informations relatives à l'environnement local de l'au moins un terminal de référence.

Dans un mode particulier de réalisation, le dispositif comprend en outre des moyens de préparation des informations d'environnement local associées au dispositif.

L'invention sera mieux comprise à la lecture de la description qui va suivre, faite uniquement à titre d'exemple, et en référence aux dessins dans lesquels :
- la figure 1 est une vue d'un exemple d'architecture de système de télécommunication mettant en oeuvre le procédé selon l'invention ;
- la figure 2 est un organigramme d'un mode de réalisation du procédé selon l'invention ;
- la figure 3 est un diagramme fonctionnel des unités mettant en oeuvre l'invention au niveau d'un terminal de référence générique ;
- la figure 4 est un diagramme fonctionnel des unités mettant en oeuvre l'invention au niveau d'une base de données centrale générique regroupant les informations d'environnement local ;
- la figure 5 est un ordinogramme détaillé de l'étape de préparation des informations relatives à l'environnement local d'un terminal de référence ;
- la figure 6 est un ordinogramme de l'étape de construction de la liste des terminaux et des noeuds de réseaux de l'infrastructure raccordés effectivement et directement au terminal de référence ;
- la figure 7 est un ordinogramme détaillé de l'étape de collecte des informations d'environnement local associées à un terminal raccordé effectivement directement au terminal de référence ; et
- la figure 8 est une vue d'un format de présentation arborescente des informations relatives à l'environnement local du terminal de référence.

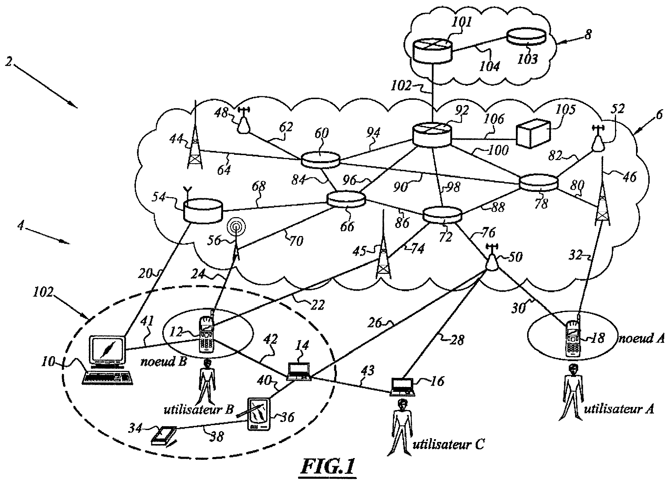

La figure 1 illustre un système de télécommunication hétérogène 2 composé d'au moins deux réseaux distincts utilisant différentes technologies d'accès sans fil pour terminaux.

Le système de télécommunication 2 comprend un ensemble 4 de terminaux, un ensemble 6 d'au moins deux réseaux distincts formant une infrastructure 6 de réseaux, et un réseau de contrôle 8 de l'infrastructure 6 associé à un opérateur.

L'ensemble des terminaux 4 comprend des terminaux divers pouvant être multimodes, multifonctionnels, mobiles ou non, et ayant plusieurs interfaces d'accès à différents réseaux. En d'autres termes, les terminaux peuvent utiliser au choix une ou plusieurs interfaces de réseaux sans fil, comme par exemple une interface de type WiFi ou une interface de type UMTS.

Un premier groupe de terminaux, ici au nombre de cinq, comprend des terminaux 10, 12, 14, 16 et 18 ayant au moins un accès direct à l'infrastructure 6.

Le terminal 10 est un ordinateur fixe de bureau raccordé à un réseau de type xDSL (ligne numérique d'abonné) de l'infrastructure 6 par une liaison sans fil d'interface 20 de type xDSL.

Le terminal 12 est un terminal de téléphone mobile personnel apte à être raccordé à un réseau à large couverture de type UMTS (Système Universel de Télécommunication Mobile) de l'infrastructure 6 par une liaison interface 22 UMTS ou à un réseau de type diffusion télévisuelle TV, DVB-H (diffusion vidéo numérique) par une liaison interface 24 d'accès DVB-H.

Le terminal 14 est un ordinateur portable 14 pouvant être raccordé à l'infrastructure 6 par une liaison interface 26 de type Wi-Fi longue portée.

Le terminal 16 est également un ordinateur portable pouvant être raccordé à l'infrastructure 6 par une interface 28 de type Wi-Fi longue portée.

Le terminal 18 est un téléphone mobile personnel pouvant être raccordé à l'infrastructure 6 au choix par une liaison interface 32 de type UMTS ou une liaison 30 de type Wi-Fi longue portée.

Sur la figure 1, le terminal 18 appartient à un utilisateur A tandis que le terminal 16 appartient à un utilisateur C. L'ensemble des terminaux 10, 12 et 14 appartiennent à un utilisateur B.

Un deuxième groupe de terminaux comprend des terminaux 34 et 36 raccordés à l'infrastructure 6 de réseaux par l'intermédiaire d'un terminal du premier groupe.

Le terminal 34 est une tablette PC (ordinateur portable) reliée au terminal 36 par une liaison interface 38 de type Bluetooth. Le terminal 36 est un assistant numérique personnel (PDA) relié au portable 14 par l'intermédiaire d'une liaison interface 40 de type Bluetooth. Les terminaux 34 et 36 sont raccordés à l'infrastructure 6 de réseaux au travers du terminal 14.

Des terminaux du premier groupe sont également reliés localement entre eux. L'ordinateur fixe 10 est raccordé au terminal 12 par une liaison interface 41 de type Infrarouge et le terminal 14 est relié au terminal 12 par une liaison interface 42 de type Wi-Fi à courte portée locale dénommé Wi-Fi ad-hoc. Les terminaux portables 14 et 16 sont reliés entre eux par une liaison 43 de type Wi-Fi ad-hoc.

L'infrastructure 6 comprend un certain nombre de noeuds, chacun étant rattaché à un type de réseau.

L'infrastructure 6 comprend des noeuds appartenant au réseau de type UMTS, trois noeuds 44, 45 et 46 étant représentés sur la figure 1. Le noeud 45 est une station d'accès UMTS raccordée au terminal 12 par la liaison 24 tandis que le noeud 46 est une station d'accès UMTS raccordée au terminal 18 par la liaison 24.

L'infrastructure réseau 6 comprend également un ensemble de noeuds rattachés au réseau de type Wi-Fi, ici représentés sur la figure 1 au nombre de trois par 48, 50 et 52. Le noeud 50 du réseau Wi-Fi est raccordé au terminal 14 par la liaison 26, au terminal 16 par la liaison 28 et au terminal 18 par la liaison 30.

L'infrastructure 6 comprend encore un serveur d'accès large bande 54 raccordé au terminal 10 par la liaison sans fil 20 et une station de diffusion vidéo 56 raccordée au téléphone mobile 12 par la liaison 22.

Les différents réseaux de l'infrastructure réseau 6 sont interconnectés entre eux via un réseau d'intégration de niveau supérieur de type Internet.

Un premier routeur d'intégration 60, d'encapsulation des couches réseaux de niveau inférieur selon le protocole Internet est raccordé au noeud Wi-Fi 48 et au noeud UMTS 44. Un deuxième routeur d'intégration 66 est raccordé au noeud serveur d'accès 54 et au noeud de diffusion télévisuelle 56. Un troisième routeur d'intégration 72 est raccordé au noeud UMTS 45 et au noeud Wi-Fi 50. Un quatrième routeur d'intégration 78 est raccordé au noeud Wi-Fi 52 et au noeud UMTS 46.

Les routeurs 60, 66, 72 et 78 sont interconnectés entre eux selon un protocole Internet par des liaisons 84, 86, 88 et 90 et contrôlés par une station de contrôle 92 des réseaux de l'infrastructure 6. La station de contrôle 92 accède aux routeurs 60, 66, 72 et 78 au travers de liaisons respectives 94, 96, 98 et 100. La station de contrôle 92 de l'infrastructure 6 est elle-même commandée par des centres administrateurs associés à des opérateurs, un seul centre administrateur portant la référence 101 étant représenté ici sur la figure 1. Le centre administrateur 101 est raccordé à d'autres infrastructures intégrées de réseaux dont une via un routeur externe 103 qui lui est relié par une liaison 104.

L'infrastructure 6 comprend une base de données centrale 105, dite d'environnement local, connectée à la station de contrôle 92 de l'infrastructure par une liaison de données 106. La base de données centrale est apte à recevoir des données de l'ensemble des terminaux via l'infrastructure 6.

L'utilisateur B dispose ici de plusieurs terminaux 10, 12, 14, 34 et 36 qui lui offrent des services identiques ou complémentaires de différents types ainsi que plusieurs options de connexion à un terminal appartenant à un autre utilisateur, A ou C par exemple. Les terminaux de l'utilisateur B sont connectés à l'infrastructure 6 directement par eux-mêmes ou indirectement par d'autres terminaux raccordés mutuellement et utilisant leurs interfaces disponibles multiples.

De manière générale, un environnement local d'un terminal dit de référence est défini comme l'ensemble des terminaux raccordés effectivement au terminal de référence indépendamment de l'infrastructure 6 de réseaux. Sur la figure 1, l'environnement local du terminal 12 pris comme référence et pouvant être considéré comme un noeud terminal de l'infrastructure 6, dénommé noeud B est constitué des terminaux 10, 14, 34 et 36. L'environnement local du terminal 12 est ici limité aux terminaux appartenant à l'utilisateur B.

En variante, l'environnement local du terminal de référence peut être élargi à un terminal appartenant à un autre utilisateur, par exemple le terminal 16 appartenant à l'utilisateur C, à condition toutefois qu'une autorisation d'échange de données ait été accordée par les deux utilisateurs B et C selon un protocole prédéterminé entre terminaux, ici les terminaux 14 et 16.

Un environnement local étant associé à un terminal de référence, des informations relatives à l'environnement local sont définies comme étant un ensemble de capacités de traitement informationnel et de connexions effectives d'accès réseau associées à chaque terminal de l'environnement local et au terminal de référence, une connexion effective d'accès réseau étant une liaison à un terminal actif de l'environnement local ou à un réseau de l'infrastructure.

A titre d'exemple, l'environnement local du terminal mobile 12 appartenant à l'utilisateur B et formant un noeud terminal B pour l'infrastructure 6, est décrit sous la forme d'un tableau 1 regroupant les informations d'environnement local et constituant à lui seul l'entité des informations d'environnement local du terminal 12, ici pris comme terminal de référence. La première colonne indique les numéros de référence associés selon la figure 1 aux terminaux de l'environnement local, à savoir 10, 14, 36, 34 ainsi que le numéro du terminal de référence, ici le terminal 12. La deuxième colonne décrit le type de terminal correspondant à chaque terminal comme par exemple celui d'ordinateur fixe, d'ordinateur portable, de téléphone mobile, d'assistant personnel (PDA) ou de tablette PC. La troisième colonne décrit les capacités de traitement informationnel associées à chaque terminal comme par exemple la puissance de calcul de l'unité centrale (UC), les types supportés de périphériques et leurs interfaces (notamment GUI (interface graphique utilisateur), écran à résolution élevée, interface son), les caractéristiques de fonctionnalités telle que la mobilité, l'autonomie en alimentation d'énergie. La quatrième colonne décrit les connexions effectives d'accès réseau associées à chaque terminal sous la forme de couple type d'interface/ identifiant du terminal de l'environnement local raccordé à l'interface ou identifiant de l'infrastructure.

**Tableau 1**

| Numéro de terminal sur la figure 1 | Type de terminal | Capacité de traitement informationnel | Connectivité réseau |
|---|---|---|---|
| 12 | Téléphone mobile | Capacité UC limitée | 6 - UMTS |
| | | GUI | 6 - DVB-H |
| | | Alimentation limitée | 14 - Wi-Fi Ad-hoc |
| | | Mobilité élevée | 10 - Infrarouge |
| 10 | Ordinateur fixe | Capacité UC élevée | 6 - DSL |
| | | Ecran résolution élevée | 12 - Infrarouge |
| | | Périphérique son | |
| | | Autonomie alimentation | |
| 14 | Ordinateur portable | Capacité UC élevée | 6 - Wi-Fi |
| | | Ecran résolution élevée | 16 - Wi-Fi Ad-hoc |
| | | Périphérique son | 36 - Bluetooth |
| | | Alimentation limitée | 12 - Wi-Fi Ad-hoc |
| 36 | Assistant personnel (PDA) | Capacité UC limitée | 14 - Bluetooth |
| | | GUI | 34 - Bluetooth |
| | | Alimentation limitée | |
| | | Mobilité élevée | |
| 34 | Tablette PC | Capacité UC limitée | 36 - Bluetooth |
| | | GUI | |
| | | Alimentation limitée | |
| | | Mobilité élevée | |

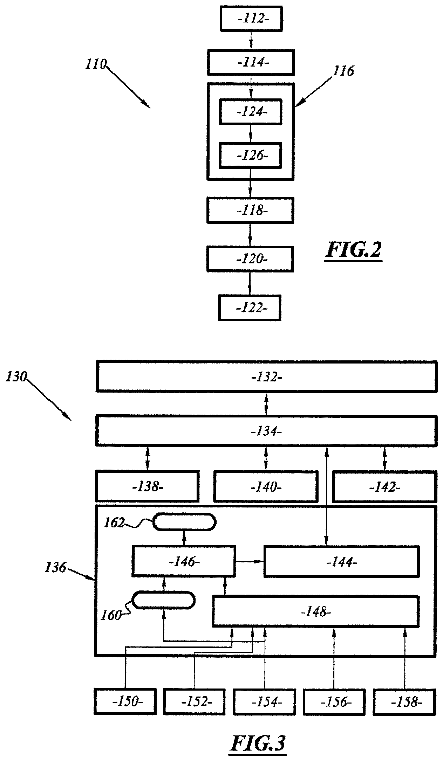

La figure 2 représente une séquence 110 d'étapes du procédé de sélection d'un réseau parmi l'ensemble des réseaux formant l'infrastructure de réseau 6.

Dans une première étape 112 le procédé de sélection est activé. Dans une étape suivante 114 de préparation, les informations relatives à l'environnement local du terminal de référence sont préparées. Ensuite succède une étape 116 d'acquisition des informations relatives à l'environnement local du terminal de référence par un terminal autre que le terminal de référence ou un noeud de l'infrastructure.

Dans une étape suivante 118, les informations acquises d'environnement local du terminal de référence sont traitées. Puis, dans l'étape 120, sur la base des informations d'environnement local du terminal de référence et d'autres types d'informations, la sélection d'un réseau est effectuée. L'étape 122 marque la fin du procédé de sélection de réseau.

L'étape d'acquisition 116 des informations relatives à l'environnement local du terminal de référence comprend une première étape 124 d'émission d'une requête d'acquisition par un terminal autre que le terminal de référence ou un noeud de l'infrastructure 6 suivie en réponse d'une étape de fourniture 126 des informations d'environnement local relatives au terminal de référence.

La figure 3 représente une forme de réalisation d'architecture fonctionnelle d'un terminal générique 130 organisée selon un modèle à couches de type ISO et mettant en oeuvre le procédé de l'invention.

Le terminal 130 comprend des moyens de traitement d'applications de service 132, des moyens de détermination d'un réseau 134 de l'infrastructure et des moyens de préparation 136 des informations d'environnement associées au terminal générique.

Les moyens de détermination d'un réseau 134 sont aptes à recevoir des données d'informations issues de moyens de fourniture d'informations de profil d'opérateur 138, de moyens de fourniture d'informations de qualité de service calculées pour la liaison globale 140 et des moyens de fourniture d'informations contextuelles 142 relatives à un autre terminal et de moyens de fourniture locaux 144 de l'environnement local du terminal. Les moyens de détermination d'un réseau 134 sont agencés pour déterminer un réseau à partir des informations de contexte en suivant un ensemble de règles prédéterminées. Ils sont en outre agencés pour déterminer le réseau en fonction des informations relatives à l'environnement local, l'environnement local de l'autre terminal étant un ensemble de terminaux raccordés effectivement à l'autre terminal indépendamment de l'infrastructure.

Les moyens 134, 138, 140 et 142 sont ici tous localisés au niveau du terminal de référence 130.

Dans une variante, les unités fonctionnelles 134, 138, 140 et 142 sont en totalité ou en partie localisées au niveau de l'infrastructure 6, par exemple au niveau d'un routeur d'intégration, d'une station d'accès à un réseau ou encore au niveau d'un autre terminal, distinct du terminal de référence considéré.

Les moyens de préparation 136 des informations d'environnement associées au terminal de référence générique 130 comprennent les moyens de fourniture locaux 144, un moyen de stockage local 146 des informations d'environnement local et des moyens de balayage 148 d'un ensemble d'interfaces d'accès réseau 150, 152, 154, 156 et 158, disponibles sur le terminal de référence 130.

Les moyens de fourniture locaux 144 sont aptes à recevoir des informations d'environnement local relatives au terminal de référence, issues du moyen de stockage local 146.

Le moyen de stockage local 146 est apte à enregistrer des informations relatives à une liste dite directe des terminaux et des noeuds réseau de l'infrastructure qui sont raccordés effectivement et directement au terminal de référence 130. La liste directe est obtenue par l'ensemble des moyens 148, 150, 152, 154, 156, 158, 160 qui forment une unité de construction de la liste directe.

Les moyens de balayage 148 sont associés à des moyens d'activation des interfaces et des moyens d'apprentissage de configuration d'interface qui ne sont pas représentés sur la figure 3.

L'ensemble des interfaces d'accès réseau disponibles sur le terminal de référence 130 balayé comprend une interface 150 de type 802.11, une interface 152 de type Bluetooth, une interface 154 de type infrarouge, une interface 156 de type DVB-H, et une interface 158 de type UMTS.

Le moyen de stockage local 146 est apte également à enregistrer des informations d'environnement local, dites dérivées, associées à chaque terminal de la liste directe, et obtenues par des moyens de collecte 160 faisant partie des moyens de préparation 134.

Les moyens de collecte 160 sont aptes à collecter les informations d'environnement, par exemple sous la forme de tables de type Daemon, pour chaque interface interconnectée. Ici, sur la figure 3 seule l'interface 154 est interconnectée.

Les informations d'environnement local stockées sur la base de données locale 146 peuvent être mises à jour cycliquement ou sur déclenchement d'un événement par une unité de coordination des moyens de préparation 136 non représentée sur la figure 3.

Les mises à jour des informations contenues dans la base de données locales 146 peuvent être envoyées à la base de données centrale 105, comme par exemple ici par une unité d'émission 162 de rafraîchissement.

Ainsi, l'architecture du terminal de référence 130 de la figure 3 permet la fourniture des informations d'environnement local associé au terminal de référence par au choix une base de données centrale 105 ou le terminal de référence lui-même.

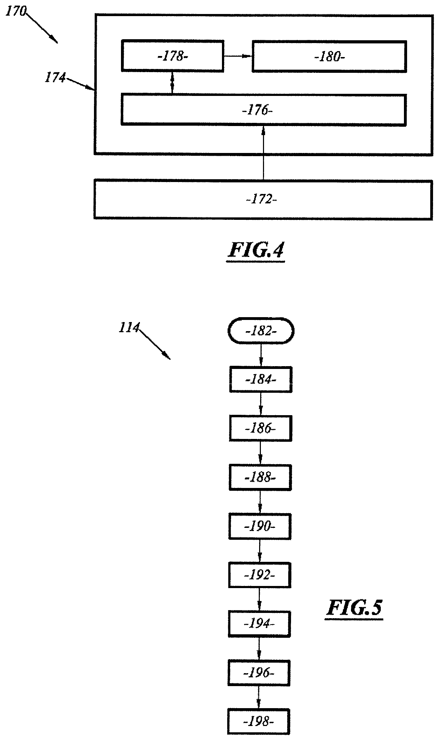

La figure 4 représente une forme de réalisation d'architecture fonctionnelle d'une base de données centrale générique 170 organisée selon un modèle à couches de type ISO et contribuant à la mise en oeuvre d'un mode particulier du procédé de l'invention.

La base de données centrale 170 comprend des moyens d'accès 172 au réseau d'intégration Internet, et une unité de contrôle 174 des informations d'environnement des terminaux.

L'unité de contrôle 174 des informations d'environnement des terminaux comprend une unité de collecte centrale 176 des informations d'environnement issues de différents terminaux et une unité de stockage centralisée 178 des informations d'environnement local des terminaux.

L'unité de contrôle 174 comprend également un module de distribution 180 apte à distribuer des informations d'environnement local associé à chaque terminal enregistré dans la base de données centrale 170 sur requête d'un terminal quelconque.

La figure 5 représente une séquence des étapes du processus de préparation 114. Après une première étape 182 de mise en marche d'un terminal de référence succède une étape de balayage 184 de l'ensemble des interfaces d'accès réseau disponibles sur le terminal de référence. Dans une étape ultérieure d'activation 186, les interfaces associées au terminal de référence sont activées. Dans une étape 188 sont détectées les interfaces disponibles et dans une étape suivante 190, les raccordements des interfaces actuellement connectables au réseau sont effectués. Dans une étape suivante 192, est constituée la liste directe concernant les accès directs depuis le terminal de référence. Dans une étape suivante 194, pour chaque terminal raccordé effectivement directement au terminal de référence, les informations d'environnement local associées sont collectées, par exemple sous la forme d'une table de type Daemon. Les informations d'environnement local du terminal objet de la collecte comprennent des informations relatives à d'autres terminaux raccordés à celui-ci. Ainsi, à l'issue de l'étape 194, les informations d'environnement local du terminal de référence comprennent des informations d'environnement de terminaux raccordés effectivement directement ou indirectement. Dans une étape suivante 196, on mémorise dans la base de données locale d'environnement local du terminal de référence les informations d'environnement local collectées. Dans l'étape suivante 198, les données de la base de données locale du terminal de référence sont envoyées à la base de données centrale 105 afin d'en permettre la mise à jour.

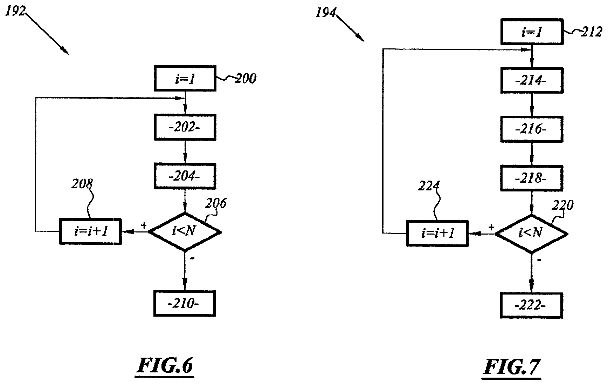

La figure 6 représente une séquence du processus 192 de construction de la liste directe des terminaux rattachés directement et effectivement au terminal de référence 130. Un compteur d'interface d'indice courant i est initialisé à 1 dans une étape 200. Dans une étape suivante 202, l'état d'activation de l'interface de rang i au sein du terminal 130 est contrôlée et dans le cas où l'interface de rang i est active, l'information de détection d'une liaison directe avec l'identifiant du terminal raccordé est rapportée dans la liste directe du terminal de référence. Ensuite dans une étape 206, une comparaison est effectuée entre la valeur actuelle du compteur i et le nombre total d'interfaces N à balayer. Dans le cas où il reste des interfaces à parcourir, dans une étape 208, le compteur d'interface i est incrémenté d'une unité et la séquence des étapes 202, 204, 206 est à nouveau effectuée. Dans le cas où la comparaison indique que le nombre total d'interfaces N à balayer a été atteint, la séquence du processus 192 est déclarée terminée dans une étape 210.

La figure 7 représente une séquence du processus 194 de collecte des informations d'environnement local des terminaux rattachés directement au terminal de référence 130. Dans une première étape 212, le compteur d'indice courant i pointant respectivement sur l'interface de rang i est initialisé à 1. A l'étape suivante 214 selon l'état d'activation de l'interface de rang i répertorié dans la liste directe, il est demandé dans une étape 216 de collecter la table d'environnement associée au terminal raccordé par l'interface de rang i et répertorié dans la liste. Après réception de la table d'environnement local du terminal raccordé directement et effectivement, la base de données locale est mise à jour dans une étape 218. Dans une étape ultérieure 220, une comparaison est effectuée entre i et le nombre total N des interfaces disponibles sur le terminal de référence. Dans le cas où i est inférieur strictement à N, dans une étape 224, le compteur d'interface i est incrémenté d'une unité et la séquence des étapes 214, 216, 218, 220 est à nouveau effectuée. Dans le cas où la comparaison indique que la totalité des interfaces a été balayée, la séquence du processus 194 est déclarée terminée dans une étape 226.

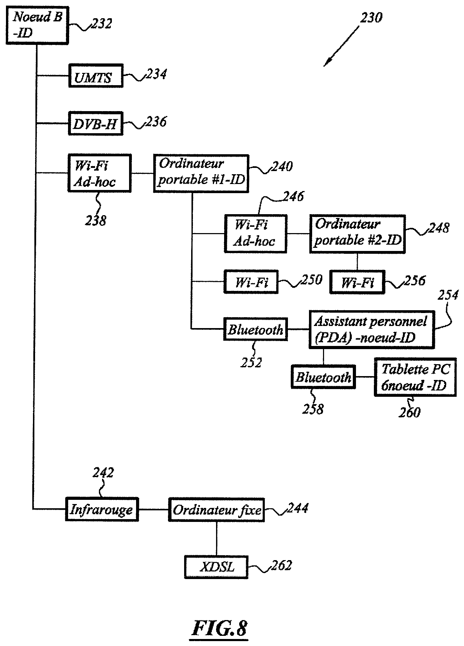

La figure 8 illustre un format de message fourni à l'issue de l'étape 126 de fourniture des informations d'environnement local relatives au terminal de référence dans le cas particulier d'une fourniture des informations relatives à l'environnement local du terminal 12 se trouvant dans la configuration de la figure 1. Le message comprend selon une structure arborescente en tête d'arbre un champ 232 contenant l'identifiant du noeud du terminal 12, ici le noeud B.

Du champ 232 sont dérivés des champs contenant des codes des interfaces disponibles du terminal 12 à savoir un premier champ 234 contenant le code d'interface « UMTS », un deuxième champ 236 contenant le code d'interface « DVB-H », un troisième champ 238 contenant le code d'interface « Wi-Fi ad-hoc » associé à un champ 240 contenant le code de terminal raccordé, ici « ordinateur portable #1 », et son identifiant réseau, et un quatrième champ 242 contenant le code d'interface « infrarouge » associé à un champ 244 indiquant « ordinateur fixe ». Lorsqu'un champ d'interface n'est pas associé à un champ de terminal de raccordement, cela signifie que l'interface est raccordée à un noeud de l'infrastructure 6.

Du champ 240 dérive un ensemble de trois champs d'interface. Un premier champ 246 contenant le code « Wi-Fi ad-hoc » est associé à un champ 248 de terminal contenant « ordinateur portable » avec son numéro d'identifiant ID. Un deuxième champ 250 contient le code « Wi-Fi ». Un troisième champ 252 contenant le code « Bluetooth » est associé à un champ 254 de terminal contenant « assistant personnel (PDA) » avec son numéro d'identifiant. Du champ 248 dérive un champ d'interface 256 contenant « Wi-Fi ». Du champ de terminal 254 dérive un champ d'interface 258 contenant « Bluetooth » associé à un champ 260 de terminal 24 contenant « tablette PC » avec son identifiant. Du champ de terminal 242 dérive un champ d'interface 262 contenant « xDSL ».

Ainsi, est représenté l'ensemble de la connectivité de l'environnement local associé au terminal 12. Cette représentation apparaît ici comme un condensé de l'environnement local du terminal 12 décrit dans le tableau 1, les informations de connectivité de réseau étant essentiellement représentées. De nombreuses variantes de format de présentation des informations d'environnement local intègrent à divers degrés les informations d'environnement local telles que décrites dans le tableau 1 et utilisent un langage de programmation usuel de gestion de base de données.

Un exemple de scénario de télécommunication de terminal à terminal illustrant des avantages du procédé de sélection de réseau à partir des informations relatives à l'environnement local d'un terminal de référence est décrit ci-dessous.

L'architecture du système de télécommunication considéré pour ce scénario est l'architecture décrite dans la figure 1. Dans cet exemple, le procédé est mis en oeuvre dans le cadre d'un appel depuis le terminal 18, agissant comme noeud terminal A appelant et source d'envoi d'un fichier de 10 Mégabits au noeud terminal B, c'est-à-dire le terminal 12 agissant comme terminal appelé et destinataire du fichier. Les informations d'environnement local disponibles dans la base de données centrale 105 de l'infrastructure 6 sont décrites sous la forme d'un tableau 2 ci-dessous.

**Tableau 2**

| Numéro de terminal | Type de terminal | Capacité de traitement informationnel | Connectivité réseau |
|---|---|---|---|
| 18 (noeud A) | Téléphone mobile | Capacité UC limitée | UMTS (direct) |
| | | GUI | Wi-Fi (direct) |
| | | Alimentation limitée | |
| | | Mobilité élevée | |
| 12 (noeud B) | Téléphone mobile | Capacité UC limitée | UMTS (direct) |
| | | GUI | DVBH (direct) |
| | | Alimentation limitée | Wi-Fi (via 14[Wi-Fi]) |
| | | Mobilité élevée | XDSL (via 10 [Infrarouge]) |

Le noeud A envoie une requête d'acquisition des informations d'environnement local du terminal 12 à la base de données centrale 105 afin d'obtenir au moins les informations d'environnement local du noeud terminal de destination B. La base de données centrale 105 envoie au noeud A les informations d'environnement local relatives au terminal 12 telles que décrites dans le tableau 2. Après acquisition des informations d'environnement local relatives au terminal 12, le noeud A se trouve alors en mesure de décider la sélection du réseau lui permettant d'optimiser un certain nombre de critères relatifs à la liaison globale.

Un exemple de critères est fourni ici à titre d'exemple consistant à décider que si le noeud source 18 dispose d'une interface Wi-Fi et le noeud destinataire dispose d'une interface Wi-Fi et que l'application en cours est un transfert de fichiers, le réseau sélectionné est le réseau de type Wi-Fi.

Le scénario exposé ci-dessus en utilisant une sélection basée sur des informations d'environnement local présente les avantages exposés ci-dessous.

Dans le cas où une sélection n'est pas effectuée par un procédé basé sur l'environnement local, le mécanisme de sélection aurait été le suivant. Le terminal 18 utilise un réseau UMTS de l'infrastructure 6 qui accède au terminal 12. Comme les deux noeuds ont chacun un accès à un réseau UMTS, avec des mécanismes classiques, ils choisiraient un réseau de type UMTS pour le transfert de fichiers. Le choix effectué selon un procédé classique présente l'inconvénient que le débit offert par le réseau UMTS est beaucoup plus faible que celui d'un réseau Wi-Fi. En conséquence, le temps de transfert du fichier peut être très long. De plus, le coût d'utilisation d'un réseau UMTS est basé sur une taxation par paquets alors que le Wi-Fi est gratuit ou a simplement des taxations minimales pour un abonnement par mois. Il en résulte que le coût d'un trajet terminal à terminal sur un réseau UMTS est plus élevé que celui de l'utilisation d'un réseau de type Wi-Fi.

Le réseau Wi-Fi convient aux transferts de fichier de données tandis que le réseau UMTS est plus adapté dans le cas de transfert de données téléphoniques. Ainsi, sélectionner l'UMTS pour un transfert de fichier de 10 Mégabits ne permet pas d'obtenir une gestion optimisée des ressources de réseaux.

En l'absence d'un procédé fondé sur l'environnement local du terminal de référence 12, ici un terminal destinataire, le mécanisme de sélection est à moitié aveugle et ne peut pas savoir quelles sont les disponibilités locales autour du terminal de destination.

Le procédé de sélection d'un réseau basé sur l'environnement local d'un terminal de destination offre ainsi une plus large connectivité pour un mobile, permettant ainsi d'optimiser encore plus les critères de sélection fonction des qualités de services, d'équilibrage de charges sur un ensemble de réseaux hétérogène.

Cet accroissement de connectivité peut également être mis à profit pour un nombre important de services offerts pour des configurations de liaison de terminal à terminal et de trafic variées, en y intégrant la fonction de mobilité des terminaux.

## Revendications

1. Procédé de sélection d'un réseau de télécommunication à accès sans fil pour terminaux parmi un ensemble d'au moins deux réseaux de télécommunication à accès sans fil formant une infrastructure (6) de réseaux, apte à assurer une liaison globale entre un premier terminal (18) et un deuxième terminal (12), le procédé comprenant les étapes consistant à :
fournir des informations de contexte relatives à un ensemble d'au moins un terminal dit à contexte pris parmi les premier et deuxième terminaux (12, 18),
déterminer le réseau choisi à partir des informations de contexte de l'ensemble des terminaux à contexte (12, 18) en suivant un ensemble de règles prédéterminées,
**caractérisé en ce que** les informations de contexte d'au moins un terminal de référence (12) pris dans l'ensemble des terminaux à contexte comprennent des informations relatives à un environnement local de l'au moins un terminal de référence, l'environnement local de l'au moins un terminal de référence (12) étant un ensemble de terminaux (10, 14, 34, 36) raccordés effectivement à l'au moins un terminal de référence (12) indépendamment de l'infrastructure (6), et
**en ce que** la détermination du réseau choisi dépend des informations relatives à l'environnement local de l'au moins un terminal de référence (12).

2. Procédé de sélection d'un réseau selon la revendication 1, **caractérisé en ce que** les informations relatives à l'environnement local dudit au moins un terminal de référence (130, 12, 18) comprennent un ensemble de connexions effectives d'accès réseau associées à au moins certains terminaux de l'environnement local du terminal de référence (130, 12, 18), une connexion effective d'accès réseau étant une liaison à un terminal actif de l'environnement local du terminal de référence (130, 12, 18) ou à un noeud réseau de l'infrastructure (6).

3. Procédé de sélection d'un réseau selon la revendication 2, **caractérisé en ce que** les informations relatives à l'environnement local dudit au moins un terminal de référence (130) comprennent un ensemble de capacités de traitement informationnel associées à au moins certains terminaux de l'environnement local du terminal de référence (130, 12).

4. Procédé de sélection d'un réseau selon l'une quelconque des revendications 1 à 3, **caractérisé en ce que** la fourniture des informations relatives à l'environnement local est effectuée par chaque terminal de référence (130).

5. Procédé de sélection d'un réseau selon l'une quelconque des revendications 1 à 3, **caractérisé en ce que** la fourniture des informations de l'environnement local est effectuée par une base de données centrale (105) regroupant pour un ensemble de terminaux, les données d'informations relatives à l'environnement local de tous les terminaux.

6. Procédé de sélection d'un réseau selon l'une quelconque des revendications 1 à 5, **caractérisé en ce qu'**il comprend l'étape consistant à préparer (114) les informations relatives à l'environnement local de chaque terminal de référence comprenant les étapes consistant à :
construire une liste dite directe (192) des terminaux et des noeuds réseau de l'infrastructure raccordés effectivement et directement au terminal de référence,
collecter (194) pour chaque terminal raccordé effectivement et directement au terminal de référence les informations d'environnement local associées.

7. Procédé de sélection d'un réseau selon l'une quelconque des revendications 1 à 6, **caractérisé en ce que** la détermination du réseau choisi dépend d'informations d'au moins une catégorie de l'ensemble des catégories constitué pour chaque terminal de contexte par
un profil d'utilisateur indiquant des critères d'acceptation de fourniture de service associé à une application,
un profil de consommation,
un profil de types de couvertures souhaités,
des capacités de transmission et qualité de réception calculées associée à une option de réseau,
des informations de profil d'opérateur prenant en compte la capacité de son infrastructure et sa politique tarifaire.

8. Procédé de sélection d'un réseau selon l'une quelconque des revendications 1 à 7, **caractérisé en ce que** l'ensemble de l'au moins un terminal de référence contient un seul élément.

9. Système de télécommunication comprenant
au moins deux terminaux (12, 18),
un ensemble d'au moins deux réseaux de télécommunication à accès sans fil formant une infrastructure (6) de réseaux apte à assurer une liaison globale entre un premier terminal (18) et un deuxième terminal (12),
**caractérisé en ce qu'**il comprend des moyens de mise en oeuvre du procédé défini selon l'une quelconque des revendications 1 à 7.

10. Programme d'ordinateur comprenant des instructions de code de programme pour l'exécution des étapes du procédé selon l'une quelconque des revendications 1 à 7 lorsque ledit programme est exécuté sur un ordinateur.

11. Support de données **caractérisé en ce qu'**il comprend des instructions qui, lorsqu'elles sont exécutées par un ordinateur mettent en oeuvre le procédé selon l'une quelconque des revendications 1 à 7.

12. Dispositif de sélection d'un réseau de télécommunication à accès sans fil pour terminaux parmi un ensemble d'au moins deux réseaux de télécommunication à accès sans fil formant une infrastructure (6) de réseaux, apte à assurer une liaison globale entre un premier terminal et un deuxième terminal comprenant :
- des moyens de fourniture (142) d'informations contextuelles, agencés pour fournir des informations de contexte relatives à un ensemble d'au moins un terminal dit à contexte ;
- des moyens de détermination (134) d'un réseau de télécommunication à accès sans fil, agencés pour déterminer un réseau à partir des informations de contexte en suivant un ensemble de règles prédéterminées,
**caractérisé en ce que**, les informations de contexte d'au moins un terminal de référence (12) pris dans l'ensemble des terminaux à contexte comprenant des informations relatives à un environnement local de l'au moins un terminal de référence, l'environnement local de l'au moins un terminal de référence (12) étant un ensemble de terminaux (10, 14, 34, 36) raccordés effectivement à l'au moins un terminal de référence (12) indépendamment de l'infrastructure (6), les moyens de détermination du réseau sont en outre agencés pour déterminer le réseau en fonction des informations relatives à l'environnement local de l'au moins un terminal de référence (12).

13. Dispositif selon la revendication 12, comprenant en outre des moyens de préparation (136) des informations d'environnement local associées au dispositif.

## Patentansprüche

1. Verfahren zur Auswahl eines Fernmeldenetzes mit drahtlosem Zugang für Endgeräte aus einer Einheit von mindestens zwei Fernmeldenetzen mit drahtlosem Zugang, die eine Infrastruktur (6) von Netzen bilden, die geeignet ist, eine globale Verbindung zwischen einem ersten Endgerät (18) und einem zweiten Endgerät (12) zu gewährleisten, wobei das Verfahren die Schritte enthält, die darin bestehen:
Kontextinformationen bezüglich einer Einheit mindestens eines so genannten Kontext-Endgeräts zu liefern, das von den ersten und zweiten Endgeräten (12, 18) genommen wird,
das gewählte Netz ausgehend von den Kontextinformationen der Einheit von Kontext-Endgeräten (12, 18) zu bestimmen, indem einer Einheit von vorbestimmten Regeln gefolgt wird,
**dadurch gekennzeichnet, dass** die Kontextinformationen mindestens eines Bezugs-Endgeräts (12), das aus der Einheit der Kontext-Endgeräte genommen wird, Informationen bezüglich einer lokalen Umgebung des mindestens einen Bezugs-Endgeräts enthalten, wobei die lokale Umgebung des mindestens einen Bezugs-Endgeräts (12) eine Einheit von Endgeräten (10, 14, 34, 36) ist, die tatsächlich an das mindestens eine Bezugs-Endgerät (12) unabhängig von der Infrastruktur (6) angeschlossen sind, und
dass die Bestimmung des gewählten Netzes von den Informationen bezüglich der lokalen Umgebung des mindestens einen Bezugs-Endgeräts (12) abhängt.

2. Netzauswahlverfahren nach Anspruch 1, **dadurch gekennzeichnet, dass** die Informationen bezüglich der lokalen Umgebung des mindestens einen Bezugs-Endgeräts (130, 12, 18) eine Einheit von tatsächlichen Netzzugangsverbindungen enthalten, die mindestens bestimmten Endgeräten der lokalen Umgebung des Bezugs-Endgeräts (130, 12, 18) zugeordnet sind, wobei eine tatsächliche Netzzugangsverbindung eine Verbindung mit einem aktiven Endgerät der lokalen Umgebung des Bezugs-Endgeräts (130, 12, 18) oder mit einem Netzknoten der Infrastruktur (6) ist.

3. Netzauswahlverfahren nach Anspruch 2, **dadurch gekennzeichnet, dass** die Informationen bezüglich der lokalen Umgebung des mindestens einen Bezugs-Endgeräts (130) eine Einheit von Informationsverarbeitungskapazitäten enthalten, die mindestens bestimmten Endgeräten der lokalen Umgebung des Bezugs-Endgeräts (130, 12) zugeordnet sind.

4. Netzauswahlverfahren nach einem der Ansprüche 1 bis 3, **dadurch gekennzeichnet, dass** das Liefern der Informationen bezüglich der lokalen Umgebung von jedem Bezugs-Endgerät (130) ausgeführt wird.

5. Netzauswahlverfahren nach einem der Ansprüche 1 bis 3, **dadurch gekennzeichnet, dass** das Liefern der Informationen der lokalen Umgebung von einer zentralen Datenbank (105) ausgeführt wird, die für eine Einheit von Endgeräten die Daten von Informationen bezüglich der lokalen Umgebung aller Endgeräte zusammenfasst.

6. Netzauswahlverfahren nach einem der Ansprüche 1 bis 5, **dadurch gekennzeichnet, dass** es den Schritt enthält, der darin besteht, die Informationen bezüglich der lokalen Umgebung jedes Bezugs-Endgeräts bereitzustellen (114), der die Schritte enthält, die darin bestehen:
eine so genannte direkte Liste (192) der Endgeräte und der Netzknoten der Infrastruktur zu erstellen, die tatsächlich und direkt an das Bezugs-Endgerät angeschlossen sind,
für jedes tatsächlich und direkt an das Bezugs-Endgerät angeschlossene Endgerät die zugeordneten lokalen Umgebungsinformationen zu sammeln (194).

7. Netzauswahlverfahren nach einem der Ansprüche 1 bis 6, **dadurch gekennzeichnet, dass** die Bestimmung des gewählten Netzes von Informationen mindestens einer Kategorie der Einheit der Kategorien abhängt, die für jedes Kontext-Endgerät besteht aus
einem Benutzerprofil, das Annahmekriterien der Lieferung einer einer Anwendung zugeordneten Dienstleistung anzeigt,
einem Verbrauchsprofil,
einem Profil von Typen gewünschter Versorgungen, berechneten Übertragungs- und Empfangsqualität-Kapazitäten, die einer Netzoption zugeordnet ist, Betreiberprofilinformationen, die die Kapazität seiner Infrastruktur und seine Tarifpolitik berücksichtigen.

8. Netzauswahlverfahren nach einem der Ansprüche 1 bis 7, **dadurch gekennzeichnet, dass** die Einheit des mindestens einen Bezugs-Endgeräts ein einziges Element enthält.

9. Fernmeldesystem, das enthält
mindestens zwei Endgeräte (12, 18),
eine Einheit von mindestens zwei Fernmeldenetzen mit drahtlosem Zugang, die eine Infrastruktur (6) von Netzen bilden, die eine globale Verbindung zwischen einem ersten Endgerät (18) und einem zweiten Endgerät (12) gewährleisten kann,
**dadurch gekennzeichnet, dass** es Einrichtungen zur Durchführung des nach einem der Ansprüche 1 bis 7 definierten Verfahrens enthält.

10. Computerprogramm, das Programmcodeinformationen zur Ausführung der Schritte des Verfahrens nach einem der Ansprüche 1 bis 7 enthält, wenn das Programm auf einem Computer ausgeführt wird.

11. Datenträger, **dadurch gekennzeichnet, dass** er Anweisungen enthält, die, wenn sie von einem Computer ausgeführt werden, das Verfahren nach einem der Ansprüche 1 bis 7 durchführen.

12. Vorrichtung zur Auswahl eines Fernmeldenetzes mit drahtlosem Zugang für Endgeräte aus einer Einheit von mindestens zwei Fernmeldenetzen mit drahtlosem Zugang, die eine Infrastruktur (6) von Netzen bilden, die eine globale Verbindung zwischen einem ersten Endgerät und einem zweiten Endgerät gewährleisten kann, die enthält:
- Liefereinrichtungen (142) von Kontextinformationen, die eingerichtet sind, Kontextinformationen bezüglich einer Einheit von mindestens einem so genannten Kontext-Endgerät zu liefern;
- Bestimmungseinrichtungen (134) eines Fernmeldenetzes mit drahtlosem Zugang, die eingerichtet sind, ein Netz ausgehend von den Kontextinformationen zu bestimmen, indem sie einer Einheit vorbestimmter Regeln folgen,
**dadurch gekennzeichnet, dass**, da die Kontextinformationen mindestens eines Bezugs-Endgeräts (12) aus der Einheit der Kontext-Endgeräte Informationen bezüglich einer lokalen Umgebung des mindestens einen Bezugs-Endgeräts enthalten, wobei die lokale Umgebung des mindestens einen Bezugs-Endgeräts (12) eine Einheit von Endgeräten (10, 14, 34, 36) ist, die tatsächlich an das mindestens eine Bezugs-Endgerät (12) unabhängig von der Infrastruktur (6) angeschlossen sind, die Bestimmungseinrichtungen des Netzes außerdem eingerichtet sind, das Netz abhängig von den Informationen bezüglich der lokalen Umgebung des mindestens einen Bezugs-Endgeräts (12) zu bestimmen.

13. Vorrichtung nach Anspruch 12, die außerdem Bereitstellungseinrichtungen (136) der der Vorrichtung zugeordneten lokalen Umgebungsinformationen enthält.

## Claims

1. Method for selecting a wireless access telecommunication network for terminals from a group of at least two wireless access telecommunication networks forming a network infrastructure (6), able to provide a global link between a first terminal (18) and a second terminal (12), the method comprising steps consisting in:
providing context information relating to a group of at least one so-called context terminal taken from the first and second terminals (12, 18),
determining the chosen network on the basis of the context information of the group of context terminals (12, 18) by following a group of predetermined rules,
**characterized in that** the context information of at least one reference terminal (12) taken from the group of context terminals comprises information relating to a local environment of the at least one reference terminal, the local environment of the at least one reference terminal (12) being a group of terminals (10, 14, 34, 36) that are effectively connected to the at least one reference terminal (12) independently of the infrastructure (6), and
**in that** the determination of the chosen network depends on the information relating to the local environment of the at least one reference terminal (12).

2. Method for selecting a network according to Claim 1, **characterized in that** the information relating to the local environment of said at least one reference terminal (130, 12, 18) comprises a group of effective network access connections that are associated with at least some terminals of the local environment of the reference terminal (130, 12, 18), an effective network access connection being a link to an active terminal of the local environment of the reference terminal (130, 12, 18) or to a network node of the infrastructure (6).

3. Method for selecting a network according to Claim 2, **characterized in that** the information relating to the local environment of said at least one reference terminal (130) comprises a group of information processing capacities that are associated with at least some terminals of the local environment of the reference terminal (130, 12).

4. Method for selecting a network according to any one of Claims 1 to 3, **characterized in that** the providing of the information relating to the local environment is performed by each reference terminal (130).

5. Method for selecting a network according to any one of Claims 1 to 3, **characterized in that** the providing of the local environment information is performed by a central database (105) pooling, for a group of terminals, the data on the information relating to the local environment of all of the terminals.

6. Method for selecting a network according to any one of Claims 1 to 5, **characterized in that** it comprises the step consisting in preparing (114) the information relating to the local environment of each reference terminal, comprising the steps consisting in:
constructing a so-called direct list (192) of the terminals and of the network nodes of the infrastructure that are effectively and directly connected to the reference terminal,
collecting (194), for each terminal effectively and directly connected to the reference terminal, the associated local environment information.

7. Method for selecting a network according to any one of Claims 1 to 6, **characterized in that** the determination of the chosen network depends on information from at least one category from the group of categories that is made up, for each context terminal, of
a user profile indicating criteria for accepting service provision, associated with an application,
a consumption profile,
a desired coverage type profile,
calculated transmission and quality of reception capacities associated with a network option,
operator profile information, taking into account the capacity of its infrastructure and its pricing policy.

8. Method for selecting a network according to any one of Claims 1 to 7, **characterized in that** the group of the at least one reference terminal contains a single element.

9. Telecommunication system comprising
at least two terminals (12, 18),
a group of at least two wireless access telecommunication networks forming a network infrastructure (6) able to provide a global link between a first terminal (18) and a second terminal (12),
**characterized in that** it comprises means for implementing the method defined according to any one of Claims 1 to 7.

10. Computer program comprising program code instructions for the execution of the steps of the method according to any one of Claims 1 to 7 when said program is executed on a computer.

11. Data carrier, **characterized in that** it comprises instructions that, when they are executed by a computer, implement the method according to any one of Claims 1 to 7.

12. Device for selecting a wireless access telecommunication network for terminals from a group of at least two wireless access telecommunication networks forming a network infrastructure (6), able to provide a global link between a first terminal and a second terminal, comprising:
- means (142) for providing contextual information that are designed to provide context information relating to a group of at least one so-called context terminal;
- means (134) for determining a wireless access telecommunication network that are designed to determine a network on the basis of the context information by following a group of predetermined rules,
**characterized in that**, the context information of at least one reference terminal (12) taken from the group of context terminals comprising information relating to a local environment of the at least one reference terminal, the local environment of the at least one reference terminal (12) being a group of terminals (10, 14, 34, 36) that are effectively connected to the at least one reference terminal (12) independently of the infrastructure (6), the means for determining the network are furthermore designed to determine the network depending on the information relating to the local environment of the at least one reference terminal (12).

13. Device according to Claim 12, furthermore comprising means (136) for preparing the local environment information that is associated with the device.
